# EUROPEAN PATENT APPLICATION

(11) **EP 4 141 996 A1**
(43) Date of publication of application: **01.03.2023**
(21) Application number: 22191267.8
(22) Date of filing: 19.08.2022
(51) Int. Cl.: H01M 4/66, H01M 4/70, H01M 10/052, H01M 10/42

(54) **THERMAL RUNAWAY SUPPRESSION ELEMENT AND THE RELATED APPLICATIONS**

(30) Priority: 30.08.2021 US 202163238322 P; 01.08.2022 US 202217878555
(71) Applicant: Prologium Technology Co., Ltd., Taoyuan City (TW); Prologium Holding Inc., Grand Cayman KY1-1104 (KY)
(72) Inventor: YANG, Szu-Nan, Taoyuan City (TW)
(74) Representative: Cabinet Chaillot

(57) **Abstract**

This invention provides a thermal runaway suppression element (10) for lithium batteries and the related applications. The thermal runaway suppression element (10) includes a composite salt layer (15) provided by a eutectic mixture containing at least two single inorganic salts. The composite salt layer (15) has a melting point between 90 to 150°C. At least one of the single inorganic salts comprises a cation, which is an amphoteric metal ion or an alkali metal ion. The thermal runaway suppression element (10) is disposed inside or outside the lithium battery. When the temperature of the lithium battery reaches to 90 to 150°C, the composite slat layer (15) will be molten and reacts with the electrochemical reaction system to passivate the active materials and decrease ionic and electronic conductivity. Therefore, the thermal runaway event and its derived problem are efficiently solved.

## Description

### BACKGROUND OF THE INVENTION

### CROSS REFERENCES TO RELATED APPLICATIONS

This application claims benefit under 35 U.S.C.§119(a) of U.S. Provisional Patent Application No. 63/238,322 filed August 30, 2021, and the entire contents of which are hereby incorporated by reference for all purposes.

### Field of Invention

The present invention relates to a safety mechanism of the batteries, in particular to a thermal runaway suppression element for lithium batteries and the related applications.

### Related Art

Because lithium batteries, such as lithium second batteries, are widely used in various products, such as vehicles, wearable products for consumers and industrial applications, portable devices and energy storage devices and so on, they are almost applied in all areas of human daily life. However, the event of accidents for the lithium batteries are heard from time to time, such as the fire or explosion of mobile phone batteries and electric vehicles. These are all because the lithium batteries still lack comprehensive and effective solutions for safety issues.

The main cause of unsafe event for fire or explosion in the lithium batteries is the thermal runaway. And the main cause of the thermal runaway of the lithium batteries is heat, which is the exothermic reactions result from the thermal cracking, induced by the elevated temperature, of the SEI (solid electrolyte interface) film, the electrolyte, the binder, and the positive and negative active materials in the battery. The current methods for suppression thermal runaway can be classified into two types: outside the battery cell and inside the battery cell, depending on the activated location for safety mechanism. For the type of outside the battery cell, a monitoring system is utilized, which uses digital arithmetic simulation. For the type of inside the battery cell, it can be further divided into physical or chemical methods. In the digital monitoring system outside the battery cell, the dedicated protection circuit and the dedicated management system on the outside of the battery cell are utilized to enhance the safety monitoring of the battery during the usage process. For the physical type of inside the battery cell, such as thermal shutdown separator, at elevated temperature for the battery cell, the holes of the separator are closed to block the passage of the ions.

For the chemical type of inside the battery cell, it can be defined as a scale controlled type or an electrochemical reaction type. In the scale controlled type, the flame retardant is added into the electrolyte to control the scale of the thermal runaway. The examples of the electrochemical reaction types are as follows:
a. The monomer or oligmar is added into the electrolyte. The polymerization will be occurred when the temperature rises to reduce the rate of the ion migration. Therefore, the ionic conductivity decreases as the temperature rises, and the electrochemical reaction rate in the battery cell slows down;
b. A positive temperature coefficient (PTC) resistance material is sandwiched between the positive electrode layer or the negative electrode layer and the adjacent current collecting layer. When the temperature of the battery cell is elevated, the electrical insulation ability is enhanced. The electric power transmission efficiency between the positive electrode layer or the negative electrode layer between the adjacent current collecting layer is reduced and the electrochemical reaction rate is also decreased; and
c. A modified layer is formed on the surface of the positive active material. When the temperature of the battery cell is elevated, the modified layer is transformed into a dense film, which increases the resistance of the charge transfer to reduce the electrochemical reaction rate.

However, the above methods are aimed only for a single aspect to suppress the thermal runaway. There is still a lack of fast and multi-aspect, high-efficiency composite method for thermal runaway suppression.

Therefore, this invention provides a thermal runaway suppression element for lithium batteries and the related applications to mitigate or obviate the aforementioned problems.

### SUMMARY OF THE INVENTION

It is an objective of this invention to provide a thermal runaway suppression element for lithium batteries and the related applications. The thermal runaway suppression element disposed inside or outside the lithium battery would be molten at 90 to 150°C to react with the electrochemical reaction system. The active materials will become thermodynamically stable (i.e., inert or inactive) from a state with higher released thermal energy to a state with lower released thermal energy. The SOC (state of charge) is reduced due to the etching of the aluminum current collecting layer by the thermal runaway suppression element in the molten state. Also, during the above-mentioned process the surfaces of the active materials and the solid electrolyte are polluted or passivated to decrease ionic and electronic conductivity. The liquid, gel or jelly electrolyte is polymerized and carbonized to block ion transport. Therefore, the thermal runaway event and its derived problem are efficiently solved by this invention for the synchronization of multiple-aspects.

In order to implement the abovementioned, this invention discloses a thermal runaway suppression element, which is adapted for a lithium battery operable to charge and discharge. The thermal runaway suppression element includes a composite salt layer provided by a eutectic mixture containing at least two single inorganic salts. The composite salt layer has a melting point between 90 to 150°C. At least one of the single inorganic salts comprises a cation, which is an amphoteric metal ion or an alkali metal ion.

Preferably, the anion of these single inorganic salts is inorganic anion.

Preferably, the single inorganic salts are selected from the group consisting of LiNO₃, AlCl₃, NaCl, KCl, LiCl, AlBr₂, Ca(NO₃)₂, NaNO₃, KNO₃, ZnCl₄, FeCl₃ and FeBr₃.

Preferably, the eutectic mixture comprises an organic salt, which is selected from the group consisting of tetrabutylammonium chloride, 1-butyl-3-methylimidazolium chloride, 1-ethyl-3- methylimidazolium chloride, tetrabutylammonium bromide, tetraheptylammonium bromide and tributylhexadecylphosphonium bromide.

Preferably, the composite salt layer is supported by a substrate, which is made a material does not react with the composite salt layer in a molten state.

Preferably, the substrate includes at least one hole.

Preferably, the substrate is made of stacking metal oxide particles or woven fiberglass.

Preferably, the composite salt layer is covered by a protecting layer,which is made of thermosetting polymer, thermoplastic polymer or liquid metal.

Preferably, the composite salt layer is added with a nanometer-sized ceramic particle, which is inactive with the composite salt layer.

This invention further discloses a lithium battery with a thermal runaway suppression element, which includes a packaging component, an electrochemical reaction system, packaged by the packaging component, and a thermal runaway suppression element, disposed inside or outside the packaging component and as defined above.

Preferably, when the thermal runaway suppression element is disposed outside the packaging component, the packaging component includes a plurality of through holes, wherein one end of the through hole is connected to the thermal runaway suppression element, and the other end is connected to the electrochemical reaction system.

Preferably, the packaging component comprising: a first current collecting layer; a second current collecting layer, opposed to the first current collecting layer; and a glue frame, wherein one end of the glue frame is adhered to the first current collecting layer and the other end of the glue frame is adhered to the second current collecting layer.

Preferably, the thermal runaway suppression element is disposed on an outer surface of the first current collecting layer, and the first current collecting layer is composed of aluminum.

Preferably, the electrochemical reaction system includes a positive active material layer, a negative active material layer and a separator disposed between the positive active material layer and the negative active material layer, and the positive active material layer is directly contacted to the first current collecting layer and the negative material layer is directly contacted to the second current collecting layer.

Preferably, the through holes are formed on the first current collecting layer and/or the second current collecting layer.

Preferably, at least one of the through hole is covered by a removable gate layer.

Preferably, the gate layer is made of a silicone polymer.

Preferably, the first current collecting layer and/or the second current collecting layer includes a plurality of recesses at its open side, and each recess is corresponding to at least one through hole and the gate layer is disposed in the recess.

Preferably, a restricting layer is disposed surrounded a side wall of the thermal runaway suppression element to constrain a flow direction of the composite salt layer in a molten state, wherein the restricting layer is inactive with the composite salt layer in a molten state.

Preferably, the electrochemical reaction system includes an electrolyte salt with an O=S=O chemical bond.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIGS. 1A-1B are schematic diagrams of the embodiments of the positive active material powder to be passivated of this invention.
FIG. 1C is a schematic diagram of the embodiment of the negative active material layer to be passivated of this invention.
FIGS. 2A to 2D are schematic diagrams of the embodiments of the thermal runaway suppression element of this invention.
FIGS. 3-7 are schematic diagrams of the embodiments of the thermal runaway suppression element applied in lithium batteries of this invention.
FIG. 8 is a schematic diagram of another embodiment of the thermal runaway suppression element of this invention.

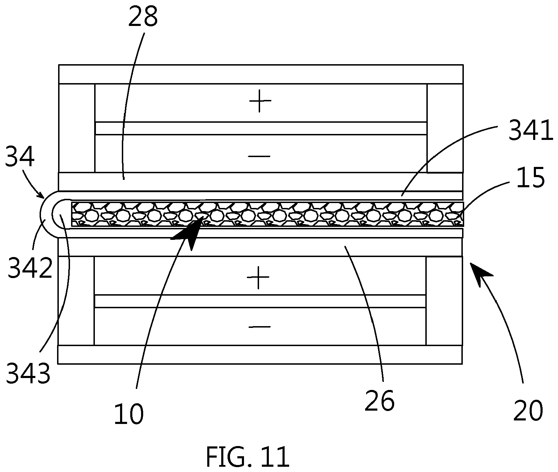

FIGS. 9-15 are schematic diagrams of the embodiments of the thermal runaway suppression element applied in lithium batteries of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

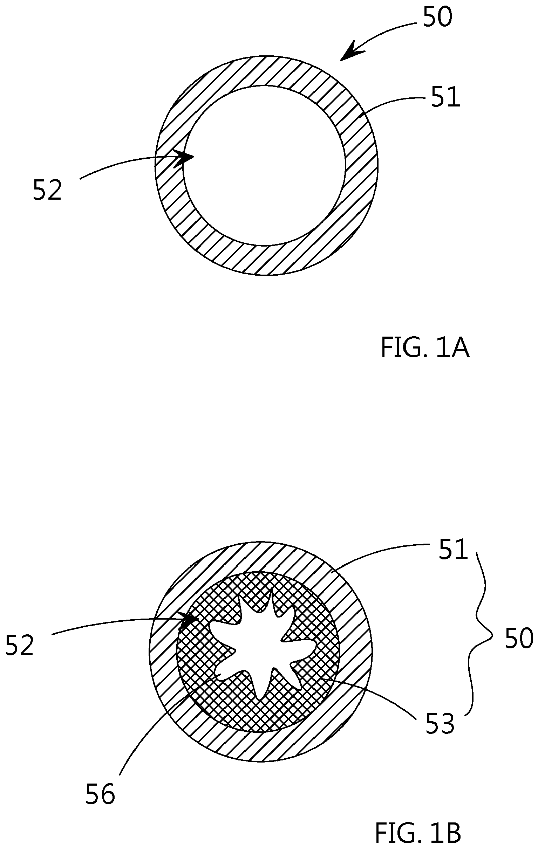

The invention is related to a thermal runaway suppression element for lithium batteries, which includes a composite salt, which would be molten to a liquid state at 90 to 150°C. When the temperature of the lithium battery reaches 90 to 150°C, the solid-state composite salt, which is disposed inside or outside the packaging component of the lithium battery, will be molten to the liquid state. The molten composite salt has liquidity and will react with some compositions of the electrochemical reaction system, which is disposed in the packaging component of the lithium battery and is operable to lithium-ion extraction and lithium-ion insertion, i.e. charge and discharge. The above-mentioned packaging component is a component used to isolate the electrochemical reaction system from the outside environment. The above-mentioned electrochemical reaction system usually includes a positive active material layer which can be dischargeably charged with lithium ions, a negative active material layer which may be lithium metal, lithium alloy or any other materials which can be releasably doped with lithium ions, a separator sandwiched between the positive active material layer and the negative active material layer, an electrolyte impregnated or filled in the positive and the negative active material layer, the binder, and so on. The molten composite salt will form a positive passivation layer on the positive active material powder. For example, the molten composite salt reacts with the electrolyte, the binder, and so on to form a passivation structure 51 on the surface of the positive active material power 52. The passivation structure 51 is considered as a shell layer and the positive active material powder 52 is considered as a core layer. The shell layer and the core layer form a passivation active material powder 50, as shown in FIG. 1A. In this condition, the size of this core layer is equal to the size of the positive active material powder 50. Moreover, passivation structure 51 further includes a lithium compound layer 53, which is formed by reacting with the composition of the positive active material powder 52, as shown in FIG. IB. In this condition, the unreacted positive active material powder 52 is the core layer 56. The passivation structure 51 may completely or partially cover the positive active material powder 52. The above-mentioned lithium battery is a non-waste battery and mounted on an electronic or mechanical device to provide power to the device.

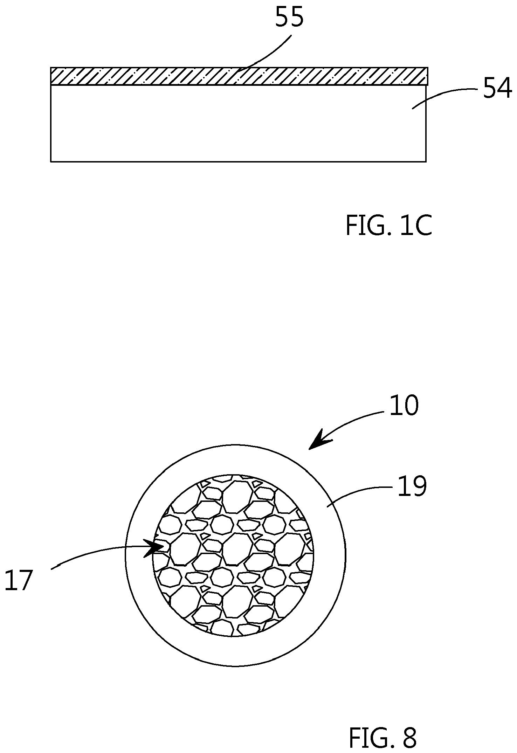

For the negative electrode, the molten composite salt reacts with the negative active material or the other compositions, such as the electrolyte, the binder, and so on to form a stable compound to cover the negative active material layer 54. The stable compound serves as a passivation layer 55, please refer to FIG. 1C. The negative active material may be made of a lithium metal, which is in the form of lithium foil or plate, a lithium alloy plate, e.g. lithium-silicone alloy, lithium-tin alloy, lithium-indium alloy and so on, or any other materials which can be releasably doped with lithium ions, such as carbon materials.

The electrolyte may be a liquid electrolyte, such as a non-aqueous organic electrolyte, a gel electrolyte, a jelly electrolyte, a single solid electrolyte, at least two solid electrolytes combination, a solid electrolyte combined with a liquid, gel or jelly electrolyte, or any combinations thereof. The solid electrolyte may be an oxide-based solid electrolyte, a sulfide-based solid electrolyte, a polymer electrolyte, any other electrolyte, such as a nitride-based solid electrolyte, a halide-based solid electrolyte, a hydride-based solid electrolyte and so on. The oxide-based solid electrolyte may be a phosphate-based solid electrolyte, such as a lithium aluminum titanium phosphate (LATP) electrolyte or a lithium phosphorous oxynitride (LiPON) solid electrolyte.

The molten composite salt layer of this invention will etch an aluminum current collecting layer to cause discharge effect and reduce the SOC (state of charge). Also, the surfaces of the active materials and/or the solid electrolyte are polluted or passivated to decrease ionic and electronic conductivity. The liquid, gel or jelly electrolyte is polymerized and carbonized to block ion transport. For example, the carbonic acid-based liquid electrolyte, which is capable of ring-opening polymerization, will perform ring-opening polymerization by the composition, such as AlCl₃ or LiCl of the composite salt layer of this invention after melting. The carbonic acid-based liquid electrolyte may be a cyclic carbonates, such as gamma-butyrolactone (GBL) or ethylene carbonate (EC), or fluoroethylene carbonate (FEC). Moreover, an O=S=O chemical bond of the electrolyte salt of the lithium battery will be broken resulting the polymer base of electrolyte is carbonized. The electrolyte salt with the O=S=O chemical bond may be the salt containing CO₂CₙF₂ₙ₊₁⁻, SO₃CnF₂ₙ₊₁⁻, SO₄(C₂H₄O)ₙCH₃⁻, SO₃(C₆F₅)⁻, SO₃(CF₂)ₙSO₃²⁻, SO₃(C₆F₄)SO₃²⁻, PO₃(C₂F₂ₙ₊₁)²⁻, PO₂(C₂F₂ₙ₊₁)₂⁻, BF₃(SO₂CₙF₂ₙ₊₁)⁻, BF₂(SO₂CₙF₂ₙ₊₁)₂⁻, BF(SO₂CₙF₂ₙ₊₁)₃⁻, B (SO₂CₙF₂ₙ₊₁)₄⁻, BF₃(PO₂F₂)⁻, BF₂(PO₂F₂)₂⁻, BF(PO₂F³)⁻, PF₅(SO₂CₙF₂ₙ₊₁)⁻, PF₄(SO₂CₙF₂ₙ₊₁)₂⁻, PF₃(SO₂CₙF₂ₙ₊₁)₃⁻, PF₂(SO₂CₙF₂ₙ₊₁)4⁻, PF(SO₂CₙF₂ₙ₊₁)₅⁻, PF₅(PO₂F₂)⁻, PF₄(PO₂F₂)₂⁻, PF₃(PO₂F₂)₃⁻, N(COCₙF₂ₙ₊₁)₂⁻, N(SO₂CₙH₂ₙ₊₁)₂⁻, N(SO₂CₙF₂ₙ₊₁)₂⁻, N(COCₙF₂ₙ+₁)(SO₂CₙF₂ₙ₊₁)⁻, N(SO₂C₆H₅)(SO₂CF₃)⁻, N(SO₂C₆F₅)₂⁻, N(SO₂C₃F₆SO₂)⁻, N(SO₂C₄F₈SO₂)⁻, CO(NSO₂F)₂²⁻, SO₂(NSO₂CₙF₂ₙ₊₁)₂²⁻, (CF₂)ₙ(SO₂NSO₂CF₃)₂²⁻, N(SO₂C₂F₄O(C₂H₄O)CH₃)₂⁻, N(SO₂C₄H₈SO₃)₂³⁻, N(SO₂CH₂CO₂)₂³⁻, N(SO₂CH₂CO(C₆H₄)SO₃)₂³⁻, (C₆H₄)(SO₂NSO₂CF₃)₂²⁻, O((C₆H₄)SO₂NSO₂CF₃)₂²⁻, (C₆H₂)(OC₂H₂O)(SO₂NSO₂CF₃)₂²⁻, N(SO₂NSOF₂)²⁻, N(CONSNSO₂)⁻, N(SO₂NSNSO₂)⁻, C(SO₂CₙH₂ₙ₊₁)₃⁻, C(SO₂CₙF₂ₙ₊₁)₃⁻(TriTFSM⁻), CH(SO₂CₙF₂ₙ₊₁)₂⁻, SO₂(NCN)₂⁻, N(SO₂CₙF₂ₙ₊₁)(CN)⁻, C(SO₂CₙF₂ₙ₊₁)(CN)₂⁻, C(SO₂CₙF₂ₙ₊₁)₂(CN)⁻, SO₂(C(CN)₂)₂⁻, N(COCₙF₂ₙ₊₁)(CnF₂ₙ₊₁)', N(SO₂CₙF₂ₙ₊₁)(CₙF₂ₙ₊₁)⁻, N(SO₂CₙF₂ₙ₊₁)(C₆F₅)-, N(SO₂(CN))₂⁻, N(PO(CN)₂)₂⁻, C(SO₂C₂N₂S(CF₃))(CN)₂⁻, N(SO₂CₙF₂ₙ₊₁)(SO₂CN)⁻, N(PO(CₙF₂ₙ₊₁)₂)(PO(CN)₂)⁻, S(OCH₅)(NSO₂CF₃)₂⁻, N(C(CF₃)NSO₂NC(CF₃))⁻, Al(N(SO₂CF₃)₂)₂(O(CH₂(H₂O)ₙCH₃)₂⁻, PO(NSO₂CF₃)₃⁻³, and etc.

The composite salt layer has a melting point between 90 to 150°C. The composite salt layer is provided by a eutectic mixture containing at least two single inorganic salts. The single inorganic salts includes an inorganic anion and at least one of the single inorganic salts comprises a cation, which is preferably an amphoteric metal ion or an alkali metal ion. However, it is not imitative that the cation is only an amphoteric metal ion or an alkali metal ion. For example, the cation may be an iron ion. The single inorganic salts may be LiNO₃,AlCl₃, NaCl, KCl, LiCl, AlBr₂, Ca(NO₃)₂, NaNO₃, KNO₃, ZnCl₄, FeCl₃, FeBr₃. For example, the eutectic mixture contains AlCl₃, NaCl and KCl at ratio of 61:26:13, contains AlCl₃, NaCl and KCl at ratio of 59:29:1, contains AlCl₃, NaCl and KCl at ratio of 75:16:9, contains AlCl₃, NaCl, KCl and LiCl at ratio of 76:11:5:8, contains NaNO₃, KNO₃, LiNO₃ and Ca(NO₃)₂ at ratio of 25:45:5:25, contains NaNO₃, KNO₃, LiNO₃ and Ca(NO₃)₂ at ratio of 65:5:5:25, or contains NaNO₃, KNO₃, LiNO₃ and Ca(NO₃)₂ at ratio of 45:25:5:25.

Moreover, in order to make the composite salt layer melt faster, an organic salt is added, which may be Tetrabutylammonium chloride (mp=70°C), 1-butyl-3-methylimidazolium chloride (mp=41°C), 1-ethyl-3- methylimidazolium chloride (mp=84°C), Tetrabutylammonium bromide (mp=103°C), Tetraheptylammonium bromide (mp=89°C), Tributylhexadecylphosphonium bromide (mp=61°C).

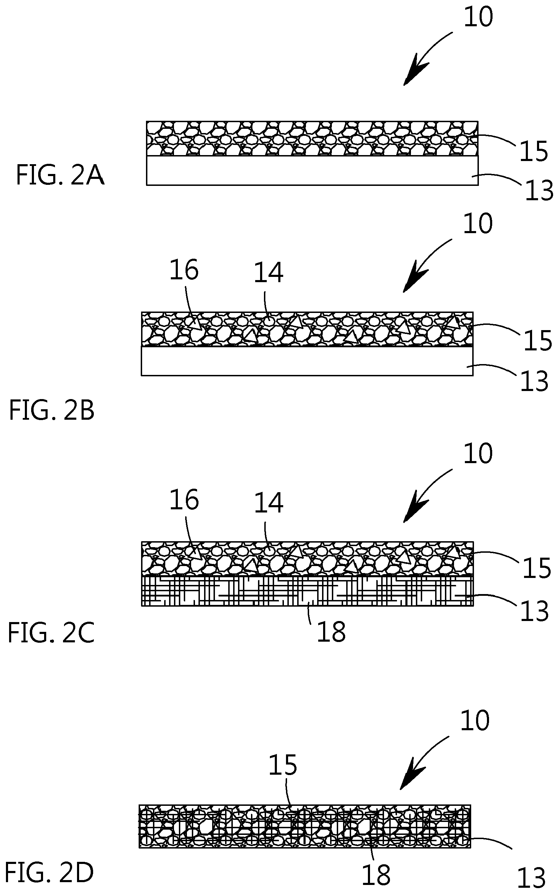

Please refer to FIGS. 2A-2D, which schematic diagrams of the embodiments of the thermal runaway suppression element of this invention. The thermal runaway suppression element 10 includes a composite salt layer 15 provided by a eutectic mixture containing at least two single inorganic salts. As shown in FIG. 2A, the eutectic mixture is coated on the surface of the substrate 13 to form the composite salt layer 15 after cooling. As shown in FIG. 2B, the eutectic mixture is ground to form powders 14. And the powders 14 are coated on the substrate 13 via a film-forming adhesive 16, which no solvent is required, to form the composite salt layer 15. Alternatively, the powders 14 are attached on the surface of the substrate 13 by electrostatic spraying. Due to the electric charges, the powders 14 are attracted to each other. The adhesive may also be used in the electrostatic spraying. The adhesive must be dry-type and solvent-free, and create adhesion at high temperature. The substrate 13 may be a dummy substrate or the surface that the thermal runaway suppression element 10 to be disposed. The above-mentioned film-forming adhesive 16 may be made of polyacrylate latex, polyethylene oxide (PEO), or poly(ethylene glycol) diacrylate (PEGDA). Also, the film-forming adhesive 16 may be made of thermosetting polymer, thermoplastic polymer or liquid metal having a relatively low melting point compared to the non-liquid metals.

The substrate 13 is made a material, such as copper or glass, does not react with the composite salt layer 15 in a molten state. Also, the substrate 13 may include at least one hole 18 or not. As shown in FIG. 2C, in case of the substrate 13 including the one hole 18, the substrate 13 serves as a guiding layer to guide the flow direction of the molten composite salt layer 15 . The substrate 13 with the hole 18 is made of stacking metal oxide particles, which do not react with the composite salt layer 15 in a molten state, or woven fiberglass to form the hole 18. Moreover, please refer to FIG. 2D, the eutectic mixture is filled into the holes 18 of the substrate 13 to form the composite salt layer 15 after cooling. The eutectic mixture is disposed in the holes 18 of the substrate. Alternatively, the substrate 13 is embedded in the composite salt layer 15.

The thermal runaway suppression element 10 is adapted to a lithium battery to serve as a safety mechanism for the lithium battery. The thermal runaway suppression element 10 is disposed inside or outside a packaging component of the lithium battery. In case of the thermal runaway suppression element 10 is disposed outside the packaging component of the lithium battery, the packaging component has to with at least one through hole for the molten thermal runaway suppression element 10 to enter into the lithium battery at the temperature between 90 to 150°C. One end of the through hole is connected to the thermal runaway suppression element 10, and the other end is connected to the electrochemical reaction system of the lithium battery. For example, the through hole may be formed by damaging the packaging component via the gas generated by the temperature-triggered chain reaction of the lithium battery, pre-forming on the packaging component, etching by the composition of the molten composite salt or puncture from external sharp objects.

The following preferred specific embodiments are, therefore, to be construed as merely illustrative, and not limitative of the remainder of the disclosure in any way whatsoever.

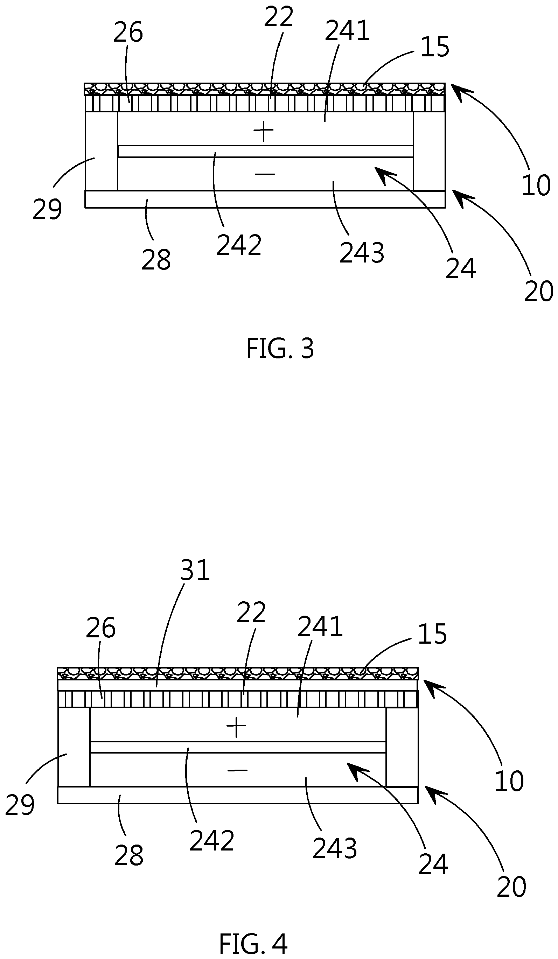

For the first embodiment, shown in FIG. 3, the lithium battery 20 includes at least one through hole 22. One end of the through hole 22 is exposed to outside environment of the lithium battery 20, and the other end is connected to the electrochemical reaction system 24, including a positive active material layer 241, a separator 242 and a negative active material layer 243, of the lithium battery 20. The runaway suppression element 10 covers one end of the through hole 22 to connect thereof. When the temperature of the lithium battery 20 reaches 90 to 150°C, the composite salt layer 15 is molten and enters into the electrochemical reaction system 24 of the lithium battery 20 via the through hole 22. The molten composite salts will react with the positive active materials and the negative active materials to cover the positive active material powders of the positive active material layer 241 and the surface of the negative active material layer 243 to terminal the electrochemical reaction of the lithium battery 20. As shown in FIG. 3, the thermal runaway suppression element 10 is disposed on the outer surface of the first current collecting layer 26 of the lithium battery 20. The first current collecting layer 26 has a plurality of through holes 22 with sizes ranging from 1 to 15 micrometers.

In this embodiment, the thermal runaway suppression element 10 is disposed outside the lithium battery 20. Therefore, it will not affect the efficiency or composition of the electrochemical reaction system of the lithium battery 20.

Please refer to FIG. 3, the lithium battery 20 includes a first current collecting layer 26, a second current collecting layer 28, a glue frame 29, an electrochemical reaction system 24, a separator 242 and an electrolyte system. The glue frame 29 is sandwiched between the first current collecting layer 26 and the second current collecting layer 28. One end of the glue frame 29 is adhered to the first current collecting layer 26 and the other end of the glue frame 29 is adhered to the second current collecting layer 28. The first current collecting layer 26, the second current collecting layer 28 and the glue frame 29 form an enclosed space (the through holes 22 are not considered here). The electrochemical reaction system 24 is arranged in the enclosed space, which includes a positive active material layer 241 adjacent to the first current collecting layer 26, a negative active material layer 243 adjacent to the second current collecting layer 28, a separator 242 located between the positive active material layer 241 and the negative active material layer 243 and an electrolyte system. The separator 242 has ion conduction characteristics and electrical insulation properties. The electrolyte system is located in the enclosed space and impregnated or mixed in the positive active material layer 241 and the negative active material layer 243 for use in ion transfer. Moreover, the positive active material layer 241 and the negative active material layer 243 may further include the electrically conductive materials and the adhesive materials. Since these parts are not technical features of this invention, the detailed description is omitted herein.

In addition, the material of the separator 242 is composed of a polymer solid electrolyte, or an electrical insulation layer with holes formed of a polymer material with coating on its surface by the ceramic powders. Also, the separator 242 may also be formed by stacking only ceramic powders by using an adhesive. The ceramic powders may not have ion conductivity, i.e. passive ceramic, or may also have ion conductivity, i.e. non-passive ceramic.

In FIG. 3, the first current collecting layer 26, the second current collecting layer 28, and the glue frame 29 are used as the packaging component of the lithium battery 30. Therefore, without considering the through holes 22, the electrochemical reaction system of the lithium battery 20 is packaged by the packaging component to isolate from the outside environment. The glue frame 29 is made of a polymer material without particular requirements. As long as it can be adhered to the surfaces of the first and second current collecting layers 26, 28 and is durable to the electrolyte system. However, the thermosetting resin is preferable, for example, silicone.

Furthermore, in order to prevent the thermal runaway suppression element 10 from interacting with the electrochemical reaction system caused via the pre-formed through holes 22, a removable gate layer 31 is disposed on the outer surface of the first current collecting layer 26 to temporarily close the through holes 22, as shown in FIG. 4. The gate layer 31 is made of a material with excellent resistance to the electrolyte system. The gate layer 31 will be cracked at about 90-110°C to form several holes. The molten composite salt layer 15 will enter into the electrochemical reaction system of the lithium battery 20. The gate layer 31 is used to prevent the electrolyte to influence the thermal runaway suppression element 10 before the temperature of the gate layer 31 reaches the above-mentioned temperature. The gate layer 31 may be made of a silicone polymer, for example, which can perform a depolymerization reaction with the molten composite salt layer 15 of the thermal runaway suppression element 10 in a molten state. Therefore, the gate layer 31 is not only cracked due to the temperature, but also depolymerized with the molten composite salt layer 15 to accelerate the gate layer 31 to form holes.

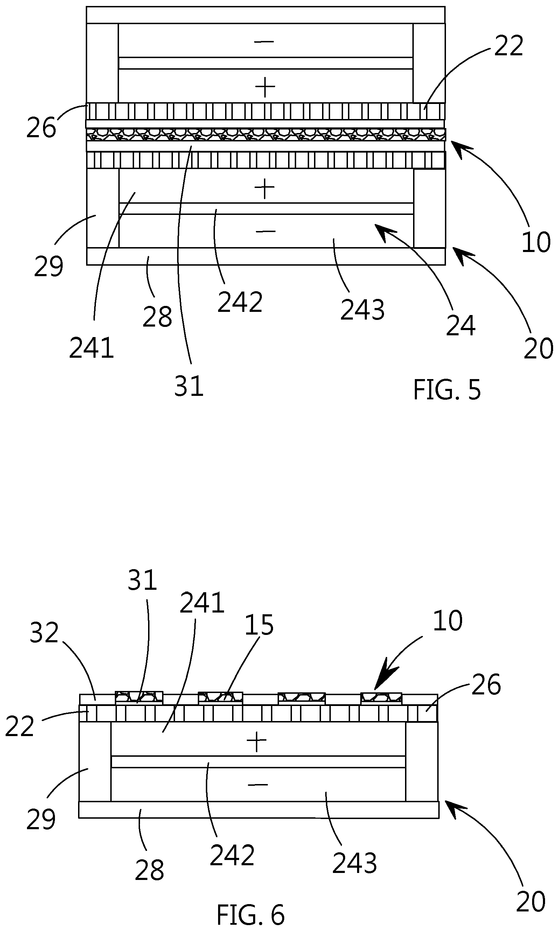

Moreover, the thermal runaway suppression element 10 of this invention can be disposed between two lithium batteries 20, please see FIG. 5. The tab is utilized to connect above-mentioned two stacked lithium batteries 30. Please refer to FIG. 6, which is another embodiment of the lithium battery with the thermal runaway suppression element of this invention. In this embodiment, a plurality of bumps 32 are located on the open side of the first current collecting layer 26. The bumps 32 are made of a passive metal, a glass or a polymer that do not react with the composite salt layer 15. The portions exposed from the bumps 32 of the first current collecting layer 26 are form the recesses, and each recess is corresponding to at least one through hole 22. The gate layer 31 and the thermal runaway suppression element 10 are filled in the recesses sequentially. The bumps 32 are less sensitive to external environmental variation than that of the thermal runaway suppression element 10. The above-mentioned external environmental variation is a change in temperature, pH or electrolyte concentration. For example, in case of the external environment variation is temperature, under such structure, compared to the bumps 32, the thermal runaway suppression element 10 will be molten first caused by the temperature variation. Because the bumps 32 are not damaged, the released ions are restricted inside surrounding area of the bumps 32, and the working direction will be constrained to the gate layer 31 and the first current collecting layer 26 to avoid invalid flow.

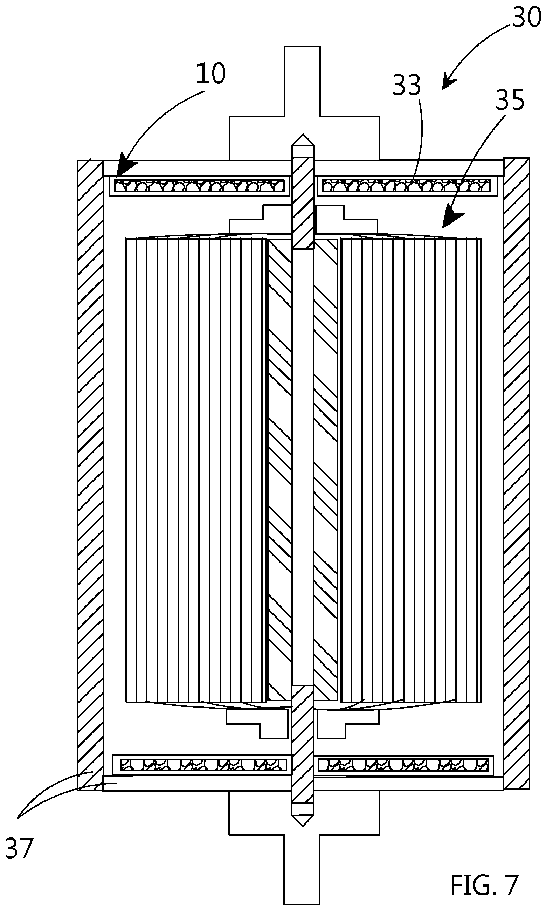

In the case of applying in the jelly roll type lithium battery, the square type lithium battery or the aluminum bag type lithium battery, the thermal runaway suppression element 10 of this invention is disposed between the package case and the electrochemical reaction system. For example, as shown in FIG. 7, the thermal runaway suppression element 10 of this invention is disposed in the space located between the package case 37 and the electrochemical reaction system 35 of the jelly roll type lithium battery 30. Moreover, the thermal runaway suppression element 10 of this invention is completely covered by a protecting layer 33 to prevent the electrochemical reaction system and the thermal runaway suppression element 10 to influence one another. The protecting layer 33 may be composed of a thermosensitive decomposition material or the same material with the gate layer 31.

Excepting for the sheet-like thermal runaway suppression element 10 in above embodiment as shown in FIGS. 2A-2d, the eutectic mixture may be form a spherical structure 17. A protecting layer 19 is coated on the spherical structure 17, referring to FIG. 8. The protecting layer 19 is made of thermosetting polymer, which is molten at a high temperature, thermoplastic polymer, such as silicone or silicone polymer which is depolymerized at a high temperature, or liquid metal having a relatively low melting point. In this embodiment, the thermal runaway suppression element 10 with the spherical structure 17 can be added into the positive active material, the negative active material or the electrolyte of all types lithium batteries. The above-mentioned lithium battery with the packaging component including the current collecting layers and the glum frame should be included, showing in FIG. 3. However, the through holes 22 are not needed. Moreover, the spherical structure 17 may also include a material, which is capable of absorbing the molten composite salt, such as glass fiber.

In the following embodiment, the molten composite salt of the thermal runaway suppression element 10 may etch through the aluminum current collecting layer to enter into the electrochemical reaction system of the lithium battery. Therefore, the the positive and negative active materials will be passivated.

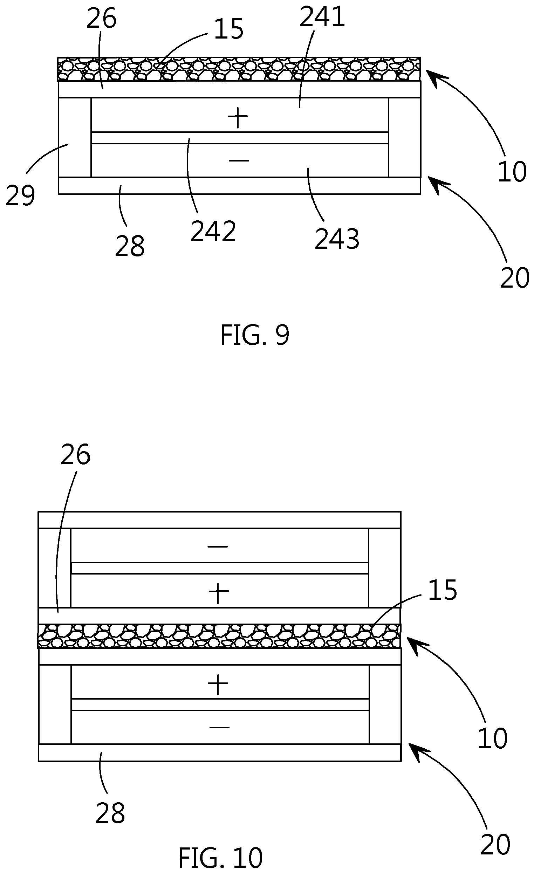

Please see FIG. 9, the thermal runaway suppression element 10 of this invention is disposed on an outer surface of the first current collecting layer 26 of a lithium battery 20. The first current collecting layer 26 is composed of aluminum.

When the temperature of the lithium battery 20, which its current collecting layers serve as the packaging component, reaches 90 to 150°C, the composite salt layer 15 of the thermal runaway suppression element 10 is molten and etches the first current collecting layer 26. After the first current collecting layer 26 is etched through, the molten composite salt enters into the lithium battery 20. The molten composite salts will cover the positive active material powders and/or the surface of the negative active material layer to form the passivation layers. Therefore, the ionic and electronic conductivity are decreased by a method for the synchronization of multiple-aspects, such as etching, passivation or polymerized. Please see FIG. 10, the thermal runaway suppression element 10 can be disposed between two stacked lithium batteries 30. When the two stacked lithium batteries 30 are connected in series, a U-shaped metal sheet 34 is utilized to connect thereof. The U-shaped metal sheet 34 is made of a material can be etched by the thermal runaway suppression element 10 or a metal mesh. The U-shaped metal sheet 34 includes two parallel arms 341 and a cross member 342 connected thereof, and the two parallel arms 341 and the cross member 342 form a space 323 to contain the thermal runaway suppression element 10. One of the parallel arm 341 is disposed on the first current collecting layer 26 of the lithium battery 20, and another parallel arm 341 is disposed on the second current collecting layer 28 of the another lithium battery 20. Therefore, the two lithium batteries 20 are electrically connected.

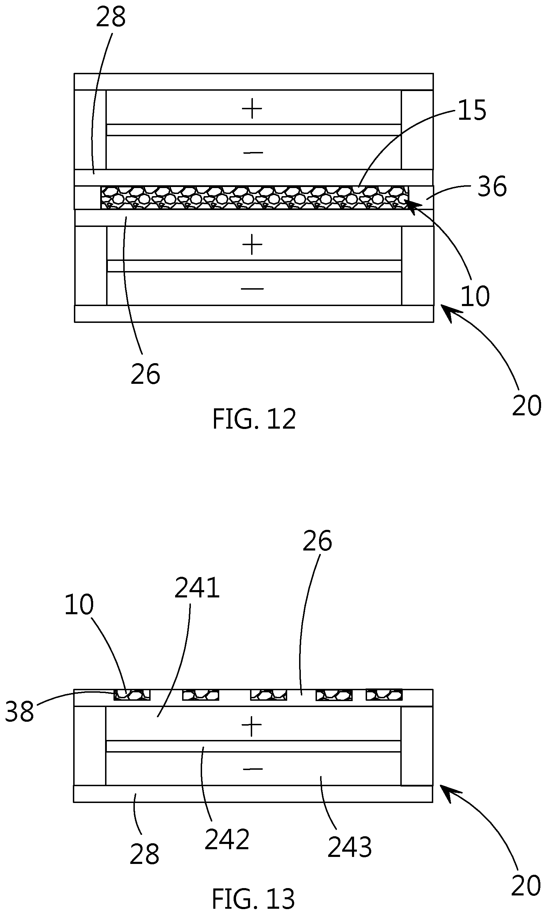

Please refer to FIG. 12, a restricting layer 36 for an etching direction is disposed surrounded a side wall of the thermal runaway suppression element 10. The restricting layer 36 is less sensitive to external environmental variation than that of the thermal runaway suppression element 10. The two end surfaces of the restricting layer 36 are adjacent to or disposed to the first and second current collecting layers 26, 28 of the batteries 20. The above-mentioned external environmental variation is a change in temperature, pH or electrolyte concentration. For example, in case of the external environment variation is temperature, under such structure, compared to the restricting layer 36, the composite salt 15 of the thermal runaway suppression element 10 will be molten first caused by the temperature variation. Therefore, because the surrounding restricting layer 36 is not damaged, the working direction of the released ions of the thermal runaway suppression element 10 are restricted inside surrounding area of the restricting layer 36. The above-mentioned restricting layer 36 may be made of a passive metal, which does not react with the molten composite salt 15, a glass or a polymer.

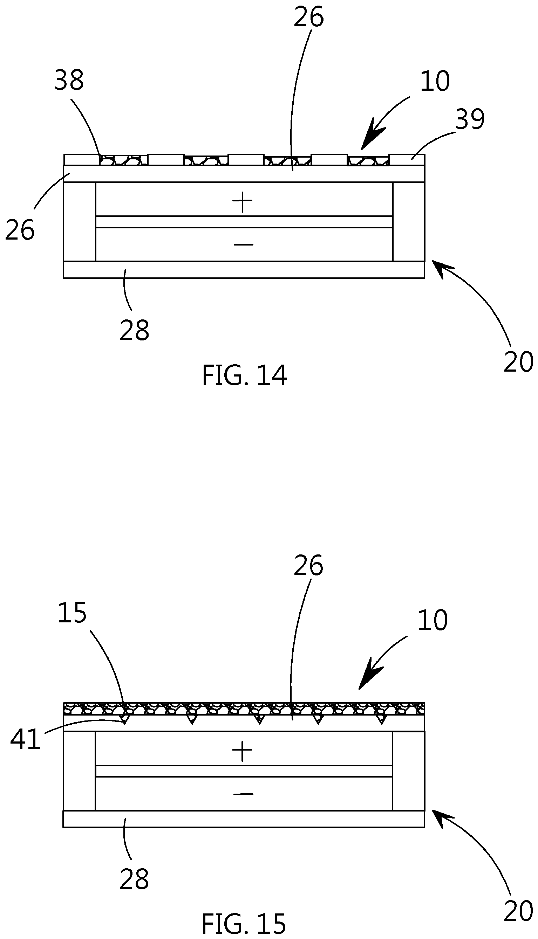

Please refer to FIG. 13, in this embodiment, the open-side surface of the first current collecting layer 26 has a plurality of recess 38 with openings. The thermal runaway suppression element 10 is filed in the recess 38. Therefore, the sidewall of the recess 38 can be used to limit the etching direction of the thermal runaway suppression element 10. Also, the thickness to be etched is reduced. Or, as shown in FIG. 14, a plurality of bumps 39 are located on the first current collecting layer 26. The bumps 39 are made of a passive metal, a glass or a polymer. The portions exposed from the bumps 39 of the first current collecting layer 26 are form the recesses 38 for storing the thermal runaway suppression element 10. Or the open side surface of the first current collecting layer 26 includes a plurality of auxiliary slots 41, which do not penetrate through thereof. The auxiliary slots 41 is used to facilitate etching, as shown in FIG. 15.

Furthermore, in the above-mentioned embodiment via the etching method, the substrate of the thermal runaway suppression element may be the current collecting layer of the lithium battery directly. In order to improve the contact between the composite salt layer and the current collecting layer, the composite salt is filled with the nanometer-sized ceramic particle, which is inactive with the composite salt layer. The gap-filling capability of the molten composite salt is improved due to the weight and surface tension of the nanometer-sized passive ceramic particle.

Accordingly, the present invention provides a thermal runaway suppression element of lithium batteries and the related applications. The thermal runaway suppression element is activated based on the temperature of the lithium battery. Once activated, the thermal runaway suppression element reacts with the compositions of the electrochemical reaction system. The passivation layers are formed to cover the positive active material powders and/or the surface of the negative active material layer. The active materials will become inactive. Also, the SOC (state of charge) is reduced due to the etching of the aluminum current collecting layer. The interfaces for the ions transfer, such as the interfaces between the solid electrolytes or the interfaces between the solid electrolyte and the solid electrolyte, are polluted or passivated to decrease ionic and electronic conductivity. The liquid, gel or jelly electrolyte is polymerized and carbonized to make structural damage for polymer electrolytes to block or decrease the ion transport. Therefore, when the temperature of the lithium battery reaches a predetermined temperature, the thermal runaway suppression element of this invention may perform the above-mentioned method for the synchronization of multiple-aspects to terminal the electrochemical reaction quickly to improve safety of the lithium batteries, and terminate the thermal runaway of the lithium battery effectively and quickly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A thermal runaway suppression element, adapted for a lithium battery operable to charge and discharge, the thermal runaway suppression element comprising a composite salt layer provided by a eutectic mixture containing at least two single inorganic salts, wherein the composite salt layer has a melting point between 90 to 150°C, and at least one of the single inorganic salts comprises a cation, which is an amphoteric metal ion or an alkali metal ion.

2. The thermal runaway suppression element of claim 1, wherein the single inorganic salts are selected from the group consisting of LiNO₃, AlCl₃, NaCl, KCl, LiCl, AlBr₂, Ca(NO₃)₂, NaNO₃, KNO₃, ZnCl₄, FeCl₃ and FeBr₃.

3. The thermal runaway suppression element of claim 1, wherein the eutectic mixture comprises an organic salt, which is selected from the group consisting of tetrabutylammonium chloride, 1-butyl-3-methylimidazolium chloride, 1-ethyl-3-methylimidazolium chloride, tetrabutylammonium bromide, tetraheptylammonium bromide and tributylhexadecylphosphonium bromide.

4. The thermal runaway suppression element of claim 1, wherein the composite salt layer is supported by a substrate, which is made a material does not react with the composite salt layer in a molten state.

5. The thermal runaway suppression element of claim 4, wherein the substrate includes at least one hole.

6. The thermal runaway suppression element of claim 5, wherein the substrate is made of stacking metal oxide particles or woven fiberglass.

7. The thermal runaway suppression element of claim 1, wherein the composite salt layer is covered by a protecting layer,which is made of thermosetting polymer, thermoplastic polymer or liquid metal.

8. The thermal runaway suppression element of claim 1, wherein the composite salt layer is added with a nanometer-sized ceramic particle, which is inactive with the composite salt layer.

9. A lithium battery with a thermal runaway suppression element, comprising:
a packaging component;
an electrochemical reaction system, packaged by the packaging component; and
a thermal runaway suppression element, disposed inside or outside the packaging component and as defined in anyone of claims 1 to 8.

10. The lithium battery of claim 9, wherein when the thermal runaway suppression element is disposed outside the packaging component, the packaging component includes a plurality of through holes, wherein one end of the through hole is connected to the thermal runaway suppression element, and the other end is connected to the electrochemical reaction system.

11. The lithium battery of claim 10, wherein the packaging component comprising:
a first current collecting layer;
a second current collecting layer, opposed to the first current collecting layer; and
a glue frame, wherein one end of the glue frame is adhered to the first current collecting layer and the other end of the glue frame is adhered to the second current collecting layer.

12. The lithium battery of claim 11, wherein the thermal runaway suppression element is disposed on an outer surface of the first current collecting layer, and the first current collecting layer is composed of aluminum.

13. The lithium battery of claim 11, wherein the electrochemical reaction system includes a positive active material layer, a negative active material layer and a separator disposed between the positive active material layer and the negative active material layer, and the positive active material layer is directly contacted to the first current collecting layer and the negative material layer is directly contacted to the second current collecting layer.

14. The lithium battery of claim 11, wherein the through holes are formed on the first current collecting layer and/or the second current collecting layer.

15. The lithium battery of claim 14, wherein at least one of the through hole is covered by a removable gate layer.

16. The lithium battery of claim 15, wherein the gate layer is made of a silicone polymer.

17. The lithium battery of claim 15, wherein the first current collecting layer and/or the second current collecting layer includes a plurality of recesses at its open side, and each recess is corresponding to at least one through hole and the gate layer is disposed in the recess.

18. The lithium battery of claim 9, wherein a restricting layer is disposed surrounded a side wall of the thermal runaway suppression element to constrain a flow direction of the composite salt layer in a molten state, wherein the restricting layer is inactive with the composite salt layer in a molten state.

19. The lithium battery of claim 9, wherein the electrochemical reaction system includes an electrolyte salt with an O=S=O chemical bond.
